(19) Europäisches Patentamt / European Patent Office / Office européen des brevets

(11) **EP 3 767 225 B1**

(12) **EUROPEAN PATENT SPECIFICATION**

(45) Date of publication and mention
of the grant of the patent:
**14.06.2023 Bulletin 2023/24**

(21) Application number: **19774217.4**

(22) Date of filing: **29.03.2019**

(51) International Patent Classification (IPC):
*G01B 21/08* *(2006.01)*

(52) Cooperative Patent Classification (CPC):
**G01B 21/08; G01B 11/04; G01B 11/06;
G01B 11/08; G01B 11/12; G01B 15/02**

(86) International application number:
**PCT/CN2019/080450**

(87) International publication number:
**WO 2019/185028 (03.10.2019 Gazette 2019/40)**

(54) **METHOD AND SYSTEM FOR MEASURING THICKNESS OF COATING OF STEEL PLATE**

VERFAHREN UND SYSTEM ZUR MESSUNG DER DICKE EINER BESCHICHTUNG EINER
STAHLPLATTE

PROCÉDÉ ET SYSTÈME POUR MESURER L'ÉPAISSEUR D'UN REVÊTEMENT DE TÔLE D'ACIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2018 CN 201810270900**

(43) Date of publication of application:
**20.01.2021 Bulletin 2021/03**

(73) Proprietor: **BAOSHAN IRON & STEEL CO., LTD.
Shanghai 201900 (CN)**

(72) Inventors:
• **ZHANG, Huabing**
**Shanghai 201900 (CN)**
• **XIAO, Wen**
**Shanghai 201900 (CN)**
• **LI, Guobao**
**Shanghai 201900 (CN)**
• **LIU, Baojun**
**Shanghai 201900 (CN)**
• **SUN, Wenxuan**
**Shanghai 201900 (CN)**
• **ZHANG, Xinqiang**
**Shanghai 201900 (CN)**

• **HAN, Dan**
**Shanghai 201900 (CN)**
• **CUI, Guanghua**
**Shanghai 201900 (CN)**
• **LIU, Ningjiang**
**Shanghai 201900 (CN)**

(74) Representative: **Maiwald GmbH
Elisenhof
Elisenstraße 3
80335 München (DE)**

(56) References cited:
CN-A- 1 501 049     CN-A- 103 453 839
CN-A- 105 651 192     CN-A- 107 830 810
JP-A- S6 235 210     JP-A- H03 200 004
JP-A- 2009 186 333     US-B2- 8 982 337

• YANG Hua: "Current Status and Prospect of
Methods for Measurement of Coating
Thickness", Materials Protection, vol. 41, no. 11,
30 November 2008 (2008-11-30), pages 34-37,
XP055740724,

## Description

### Field

The present invention relates to a method and system for measuring thickness, and in particular to a method and system for measuring the coating thickness.

### Background

In manufacturing oriented silicon steel, oxide such as MgO or $Al_2O_3$ is coated as isolating agent. The purpose of coating the oxide isolating agent is: (1) to prevent steel strips from adhering with each other during high temperature quenching; and (2) to form a magnesium silicate base layer by reacting MgO with $SiO_2$ oxide film on the surface of the steel strip when high-temperature quenching rises to about 1100°C, which promotes desulfurization and denitrification during high-temperature purification quenching. Applying the oxide isolating agent coating and decarburization quenching are usually implemented on the same line, the main processes of which, such as solution preparation, stirring, coating, drying and the like, greatly affect the quality of oriented silicon steel products. Among them, the coating thickness control is most critical. A coating that is too thick or too thin will result in the increasing of surface defects of the final product, and wrinkles formed locally on the steel strip, and even poor magnetic performance. Therefore, in the process of producing oriented silicon steel, it is necessary to precisely control the coating thickness of the oxide isolating agent.

Since the oxide isolating agent is in a powder form after drying and has low adhesion to the strip, it is difficult to measure its thickness. In the prior art, there are mainly two methods for measuring the thickness of oxide isolating agent coating described below.

One is the on-line measurement, which uses the difference in the reflection intensity of the oxide isolating agent and the steel strip to the β-ray, to calculate the oxide isolating agent coating thickness. However, in the actual manufacturing, this method has poor measurement accuracy and stability, due to the reason that, on one hand, the measuring probe is easily contaminated by the isolating agent powder and is greatly affected by the environment with dust, causing frequent maintenance and calibration for measuring system; on the other hand, the isolating agent powder coating is in uneven stripe and runs fast with the steel strip, making it difficult for the measurement system to accurately capture the reflected signal of the β-ray, and bringing large measurement errors. In addition, the β-ray radiation source has a specific decay period and requires periodic replacement, which results in high measurement and maintenance costs.

Another method is the off-line measurement, that is, taking off a sample of steel strip coated with isolating agent, scraping the isolating agent powder by certain area, and weighing the scraped powder off-line, thus the coating weight per unit area of the isolating agent could be converted. The method has high measurement accuracy and has high requirement of standardization operation in sampling process. However, since the sampling, sample delivery and weighing are done manually, incomplete powder scraping, excessive scraping area, or even accidental sweat dripping into the sample during the powder scraping process will cause distortion of the measurement results. The labor and management cost of this method is high, and the method is only used for calibration of the coating thickness measurement system. In addition, since the method is an off-line measurement, thus has poor timeliness and on-line-ability, and it is difficult to achieve quick adjustment of the coating thickness.

JP H03-200004 discloses a coat film thickness measuring instrument, wherein a steel sheet coated by a roll coater with a coating material is carried and irradiated with infrared rays by a head to measure the coat film thickness of the material after drying it and then carried to the succeeding process through a guide. The coat film thickness measuring instrument is constituted of a head, a control circuit and a line speed measuring instrument to correct the measured result of the coat film thickness in accordance with the time required from the application of the material up to the measurement of the coat film thickness by the head which is obtained from the line speed.

JP 2009-186333 relates to a measurement device for measuring in the noncontact state, the thickness of an oxide film including magnetite formed on the surface of a steel plate. The thickness of hematite is determined by irradiating a terahertz wave to a hot rolled steel plate having a scale formed on the surface, with a bilayer structure wherein the hematite and magnetite are formed from a surface layer. Then, laser light is irradiated to the hot rolled steel plate to remove the hematite, and the magnetite is transformed into wustite having approximately the same size as the magnetite. Thus, only the wustite remains in the scale, and then, the terahertz wave is irradiated to the hot rolled steel plate, to thereby determine the thickness of the wustite. Then, the whole thickness of the scale is calculated from the calculated thickness of the hematite and thickness of the wustite.

JP S62-35210 describes a plate thickness measuring instrument for hot rolled steel plates, wherein in the hot rolling stage a steel plate is transferred on a roller table and the plate thickness measuring instrument to measure the thickness of the steel plate is provided freely movably in the direction intersecting at right angles with the transfer direction of the steel plate. A frame is stored in the housing of the measuring instrument and distance meters 26, 28 are fitted to the frame. A laser beam source and an image sensor are provided on the distance meter 26 to measure the distance L1 up to the back face of the steel plate. The distance meter 28 is made similarly as well and the distance L2 up to the back face of the steel plate is measured. An arithmetic unit subtracts the distance L1, L2 from the distance Th between the distance meters 26, 28 prior to the steel plate being transferred.

US 8,982,337 discloses a gauge profile apparatus including a gauge profile system and a lap count system for determining an average three-dimensional profile over the length of a sheet coil. The gauge profile system includes a lap profile measuring device which will make a distance determination between top and bottom surfaces for the sheet coil.

Based on this, it is expected to develop a method for measuring the coating thickness of steel strip, which can measure in real time, and with low measurement cost and high measurement accuracy.

## Invention contents

One of the purposes of the present invention is to provide a method for measuring coating thickness of steel strip, by which the coating thickness of the steel strip can be measured in real time, and at low measurement cost and with high measurement accuracy.

In order to achieve the above purpose, the present invention provides a method for measuring coating thickness of steel plate, comprising the following steps:

prior to applying the coating, measuring the strip thickness $T_{strip}$ using a steel strip thickness measuring device (3), and strip length L of steel strip (1) that forms coil using a strip length measuring device (4), and after applying the coating, coiling the steel strip to form a coil and measuring outer diameter R and inner diameter $R_0$ of the coil with coating using a coil size measuring device (5), obtaining the coating thickness $T_{coating}$ using a controlling device according to the following formula: $T_{coating} = \frac{\pi}{4}(R^2 - R_0^2)/L - T_{strip}$ , wherein R, $R_0$, L, $T_{strip}$ and $T_{coating}$ are in the same unit.

In the above measuring method, the strip length L could be the total length of the strip to be measured, or could be the length of the coiled strip coil, i.e., the coiled strip length; accordingly, R and $R_0$ could be measured after completing the coiling, or could be measured real-time during the coiling.

In addition, L≥500 meters, the ratio of the sum of coating thickness of two sides to the strip thickness is 8.5 to 10.0%.

In addition, in the method for measuring coating thickness of the steel plate according to the present invention, further comprising the following step: obtaining measurement accuracy of coating thickness $\Delta T_{coating}$ based on the following formula:

$$\Delta T_{coating} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{strip}^2} ,$$

wherein $\Delta T_{coating}$ is the measurement accuracy of $T_{coating}$, $\Delta$R is the measurement accuracy of R, $\Delta R_0$ is the measurement accuracy of $R_0$, $\Delta T_{strip}$ is the measurement accuracy of $T_{strip}$, $\Delta$L is the measurement accuracy of L, and $\Delta$R, $\Delta R_0$, $\Delta T_{strip}$ and $\Delta$L refer to the measurement accuracy of the measuring device.

In addition, in the method for measuring coating thickness of the steel plate according to the present invention, $\Delta$L is selected as ≤±5‰×L.

In addition, in the method for measuring coating thickness of the steel plate according to the present invention, $\Delta$L is selected as ≤±3‰×L.

In the above preferred technical solution, in order to improve the measurement accuracy of the coating thickness, $\Delta$L is selected as ≤±3‰×L.

In addition, in the method for measuring coating thickness of the steel plate according to the present invention, $\Delta$R is selected as ≤±5‰×R, and $\Delta R_0$ is selected as ≤±5‰×$R_0$.

In addition, in the method for measuring coating thickness of the steel plate according to the present invention, $\Delta$R is selected as ≤±3‰×R, and $\Delta R_0$ is selected as ≤±3‰×$R_0$.

In the above preferred technical solution, in order to improve the measurement accuracy of the coating thickness, $\Delta$R is selected as ≤±3‰×R, and $\Delta R_0$ is selected as ≤±3‰×$R_0$.

In addition, in the method for measuring coating thickness of the steel plate according to the present invention, $\Delta T_{strip}$ is selected as ≤±5‰×$T_{strip}$.

In addition, in the method for measuring coating thickness of the steel plate according to the present invention, $\Delta T_{strip}$ is selected as ≤±3‰×$T_{strip}$.

In the above preferred technical solution, in order to improve the measurement accuracy of the coating thickness, $\Delta T_{strip}$ is selected as ≤±3‰×$T_{strip}$.

Further in present invention, the measuring instrument can be selected according to the allowable error range of the coating thickness of steel strip, and the theoretical value or the estimated value of R, $R_0$, L or $\Delta T_{strip}$ to satisfy the

measurement requirements or production needs.

Accordingly, another purpose of the present invention is to provide a measuring system for measuring the coating thickness of steel strip described above, by which the coating thickness of steel plate can be measured in real time at low measurement cost and high measurement accuracy.

In order to achieve the above purpose, the present invention provides a measuring system for coating thickness of steel plate, comprising:

a steel strip thickness measuring device (3) configured to measure the thickness $T_{strip}$ of a strip (1) prior to coating application, which, in use, is disposed upstream of a coating device (2) along the running direction of the strip (1);

a strip length measuring device (4) configured to measure the length L of the strip (1) that forms coil, which, in use, is disposed upstream of a coiling device (6) along the running direction of the strip (1);

a coil size measuring device (5) for measuring the outer diameter R and the inner diameter $R_0$ of a coil with coating, which, in use, is disposed downstream of the coiling device (6) along the running direction of the strip, and at the periphery of the area where the coil with coating passes;

a controlling device, which is respectively connected to the strip thickness measuring device, the strip length measuring device and the coil size measuring device, which is configured to receive the data of the $T_{strip}$ L, R, $R_0$ transmitted by the above measuring devices, and which is configured to calculate and output the coating thickness $T_{coating}$ based on said data.

In the above technical solution, the measuring system adopted by the method for measuring the coating thickness of the steel plate of the present invention is capable of measuring the coating thickness of the steel plate in real time, thereby realizing online measurement of the coating thickness of the steel plate and obtaining measurement data timely.

In addition, in the measuring system according to the present invention, the controlling device is configured to calculate and to output the measurement accuracy of the coating thickness $T_{coating}$ based on the following formula:

$$\Delta T_{coating} = \sqrt{(\pi^2 R^2)/(4L^2) \cdot \Delta R^2 + (\pi^2 R_0^2)/(4L^2) \cdot \Delta R_0^2 + [\pi^2 (R^4 + R_0^4 - 2R^2 R_0^2)]/16L^4 \cdot \Delta L^2 + \Delta T_{strip}^2}$$

wherein $\Delta T_{coating}$ is the measurement accuracy of $T_{coating}$, $\Delta R$ is the measurement accuracy of R, $\Delta R_0$ is the measurement accuracy of $R_0$, $\Delta T_{strip}$ is the measurement accuracy of $T_{strip}$, $\Delta L$ is the measurement accuracy of L, and $\Delta R$, $\Delta R_0$, $\Delta T_{strip}$ and $\Delta L$ refer to the measurement accuracy of the measuring device.

In addition, in the measuring system according to the present invention, said strip thickness measuring device (3) is an X-ray thickness gauge, and/or the strip length measuring device (4) is a laser speedometer based on *Doppler effect,* and/or the coil size measuring device (5) is a laser rangefinder.

In the measuring system according to the present invention, in order to improve the measurement accuracy of the coating thickness, the strip thickness measuring device (3) is preferably an X-ray thickness gauge, and the strip length measuring device is preferably a laser speedometer based on the *Doppler principle,* and the coil size measuring device is preferably a laser rangefinder. It should be noted that the X-ray thickness gauge, the laser speedometer, and the laser range finder are all commonly used equipment in the prior art, and the structural features thereof are not described herein.

Compared with the prior art, the method and the system for measuring the coating thickness of the steel plate according to the present invention have the following beneficial effects:

(1) The method and system for measuring the coating thickness of the steel plate according to the present invention can be used for measuring the coating thickness of the steel strip in real time at low measurement cost and with high measurement accuracy, thus is beneficial to improving the quality of steel products and reducing the consumption of coating raw materials.

(2) The method and system for measuring the coating thickness of the steel plate according to the present invention apply for measuring thickness of different coatings, and has good applicability, and is particularly suitable for the powder coating whose thickness is difficult to accurately measured by conventional methods, such as oxide isolating coating, MgO or $Al_2O_3$ in the manufacturing process of oriented silicon steel.

**Drawings**

Fig.1 is a schematic view showing the structure of the measuring system used in the method for measuring the coating thickness of a steel plate according to some embodiments of the present invention.

Fig.2 is a schematic view showing a measuring step of the method for measuring the coating thickness of a steel plate according to some embodiments of the present invention.

Fig.3 is a graph showing the relationship between the measured coating thickness value of the steel trip as a function of the length of the coil of Example 42.

Fig.4 is a graph showing the relationship between the coating thickness measured by the measuring method according to the present invention and the coating thickness measured by the off-line measuring method of the prior art.

**Detailed Description**

The method and system for measuring the coating thickness of the steel plate according to the present invention will be further explained and described below with reference to the accompanying drawings and specific embodiments. However, the explanation and description are not intended to unduly limit the technical solutions of the present invention. The scope of protection of the present invention is defined in the appended claims.

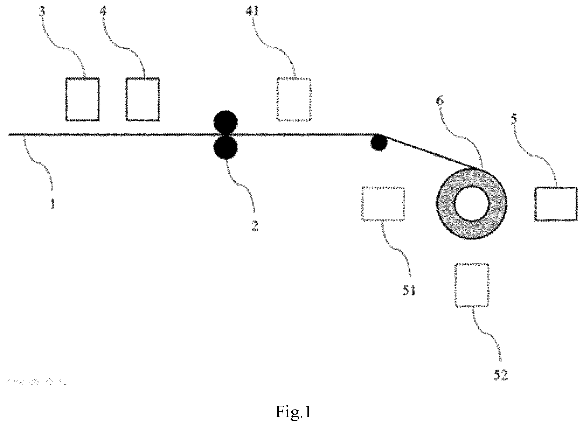

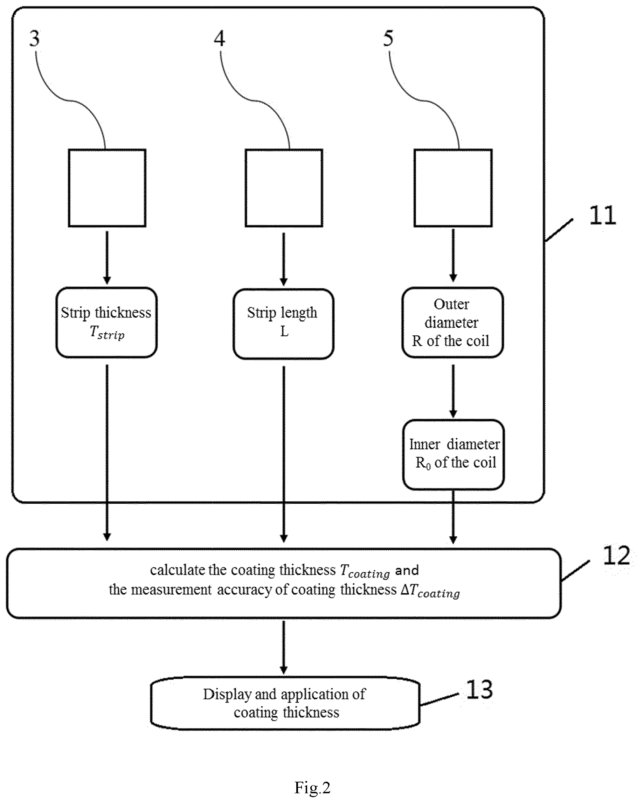

Fig.1 is a schematic view of the measuring system used in a method for measuring the coating thickness of a steel plate according to the present invention in some embodiments. It can be seen that the measuring system used in the method for measuring the coating thickness of a steel plate according to the present comprises: a strip thickness measuring device 3 may be an X-ray thickness gauge, which is set upstream of the coating device 2 along the running direction of the strip for measuring the strip thickness $T_{strip}$ of the uncoated steel strip 1, and the specific position of which may be set in the quenching coating process, or may be set at the exit of the cold rolling process before applying the coating; a strip length measuring device 4 may be a laser speedometer for measuring the strip length L of the steel strip 1 that forms coil, and its specific installation position is set upstream of the coating device 2, or set downstream of the coiler 2 and upstream of the coiler 6, that is, the device 41 in the figure; the coil size measuring device 5 may be a laser range finder for measuring the outer diameter R and the inner diameter $R_0$ of coil with coating, and its specific installation position is set at any position on the periphery of the coil with coating passes, that is, the coil size measuring device 5 or the device 51 or the device 52 in the figure 2. In addition, the measuring system used in the method for measuring the coating thickness of the steel plate according to the present invention further comprises a controlling device (not shown) which is respectively connected with the strip thickness measuring device 3, the strip length measuring device 4 and the coil size measuring device 5, to receive data of the $T_{strip}$ L, R, $R_0$ transmitted by the above measuring device, and calculate and output the coating thickness $T_{coating}$.

It should be noted that the X-ray thickness gauge, the laser speedometer, and the laser range finder are all commonly used equipment in the prior art, and the structural features thereof are not described herein.

Fig.2 is a schematic view showing a measuring step of the method for measuring the coating thickness of a steel plate according to the present invention. It can be seen that the step 11 is to use the strip thickness measuring device 3 to measure the strip thickness $T_{strip}$ of the steel strip, the strip length measuring device 4 to measure the length L of the steel strip, the coil size measuring device 5 to measure outer diameter R and inner diameter $R_0$ of the coil with coating. The step 12 is to calculate coating thickness $T_{coating}$ base on the formula $T_{coating} = \frac{\pi}{4}(R^2 - R_0^2)/L - T_{strip}$ , wherein R, $R_0$, L, $T_{strip}$ and $T_{coating}$ are in the same unit, and calculate the measurement accuracy of the coating thickness $\Delta T_{coating}$ based on the formula $\Delta T_{coating} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{strip}^2}$ , wherein $\Delta T_{coating}$ is the measurement accuracy of $T_{coating}$, $\Delta P$ is the measurement accuracy of R, $\Delta R_0$ is the measurement accuracy of $R_0$, $\Delta T_{strip}$ is the measurement accuracy of $T_{strip}$, $\Delta L$ is the measurement accuracy of L, and $\Delta R$, $\Delta R_0$, $\Delta T_{strip}$ and $\Delta L$ refer to the measurement accuracy of the measuring device.

In the following, the technical solution will further describe the technical solution of the present invention by using specific example data and prove the beneficial effects of the present case:

**Examples 1-5**

After quenching, the steel strips of Example 1-5 were applied coating of $Al_2O_3$ by a two-roll coater, and were coiled after $Al_2O_3$ was dried. The running speed of the steel strip is 50-120 m/min, the strip thickness before applying coating is 0.14-0.35 mm, the length of the steel strip that forms the coil is 6000-16000m, and the weight of the coil with coating is 14-21t. The strip thickness $T_{strip}$ before applying the coating was measured with an X-ray thickness gauge, the length L of the steel strip that forms coil was measured with a laser speedometer, and the outer diameter R and

inner diameter $R_0$ of the coil with coating was measured by a laser range finder, wherein the measurement accuracy of the X-ray thickness gauge is $\pm 0.14 \mu m$, the measurement accuracy of the laser speedometer is $\pm 0.5$ ‰$\times$L, and the measurement accuracy of the laser range finder is $\pm 1mm$. The coating thickness $T_{coating}$ is then calculated based on the formula $T_{coating} = \frac{\pi}{4}(R^2 - R_0^2)/L - T_{strip}$ , wherein the outer diameter R of the coil with coating, the inner diameter $R_0$ of the coil with coating, the length L of the coiled steel strip, and the strip thickness $T_{coating}$ before applying coating and the coating thickness $T_{coating}$ units are all converted to the same, and the measurement accuracy of coating thickness $\Delta T_{coating}$ is calculated based on the formula:

$$\Delta T_{coating} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{strip}^2,}$$

wherein $\Delta T_{coating}$ is the measurement accuracy of coating thickness $T_{coating}$, $\Delta R$ is the measurement accuracy of outer diameter R of the coil with coating, $\Delta R_0$ is the measurement accuracy of inner diameter $R_0$ of the coil with coating, $\Delta T_{strip}$ is the measurement accuracy of uncoated steel strip $T_{strip}$, $\Delta L$ is the measurement accuracy of the length L of the steel strip that forms coil.

Table 1 lists the values of the outer diameter R of the coil with coating, the inner diameter $R_0$ of the coil with coating, the length L of the coiled strip, and the strip thickness $T_{strip}$ of steel strip before applying coating measured in Examples 1-5, and the calculated coating thickness $T_{coating}$ and the measurement accuracy of coating thickness $\Delta T_{coating}$ of the coating thickness.

Table 1

| | | Running speed of steel strip (m/min) | Strip thickness $T_{strip}(\mu m)$ | inner diameter $R_0$(mm) | outer diameter R(mm) | Coiled strip length L (m) | coating thickness $T_{coating}$ ($\mu$m) | measurement accuracy of coating thickness $\Delta T_{coating}$ ($\mu$m) |
|---|---|---|---|---|---|---|---|---|
| Example 1 | | 120 | 151 | 506 | 1930 | 15877 | 20.6 | $\pm$ 0.24 |
| Example 2 | | 110 | 232 | 507 | 1836 | 9798 | 17.6 | $\pm$ 0.31 |
| Example 3 | | 90 | 271 | 508 | 1748 | 7723 | 13.5 | $\pm$ 0.36 |
| Example 4 | | 90 | 285 | 508 | 1768 | 7322 | 22.6 | $\pm$ 0.38 |
| Example 5 | | 55 | 348 | 508 | 1839 | 6599 | 23.8 | $\pm$ 0.44 |

**Examples 6-41**

After quenching, the steel strips of Example 6-41 were applied coating of $Al_2O_3$ by a two-roll coater, and was coiled after $Al_2O_3$ was dried. The strip thickness $T_{strip}$ before applying the coating was measured with an X-ray thickness gauge, the length L of the steel strip that forms coil was measured with a laser speedometer, and the outer diameter R and inner diameter $R_0$ of the coil with coating was measured by a laser range finder, wherein the measurement accuracy of the X-ray thickness gauge is $\pm 0.14 \mu m$, the measurement accuracy of the laser speedometer is $\pm 0.5$ ‰$\times$L, and the measurement accuracy of the laser range finder is $\pm 1mm$. The coating thickness $T_{coating}$ is then calculated based on the formula $T_{coating} = \frac{\pi}{4}(R^2 - R_0^2)/L - T_{strip}$ , wherein the outer diameter R and the inner diameter $R_0$ of the coil with coating, the length L of the steel strip that forms coil, and the uncoated strip thickness $T_{coating}$ and the coating thickness $T_{coating}$ are in the same unit. It is known that the theoretical value of the uncoated strip thickness $T_{strip}$ in Example 6-41 is 0.285 mm, the theoretical value of the inner diameter $R_0$ of the coil with coating is 508 mm, the theoretical value of the outer diameter R of the coil with coating is 1835. When the theoretical value of the strip length L of steel strip that forms coil is 8000 mm, the theoretical value of the coating thickness $T_{coating}$ can be calculated as $20.2 \mu m$

based on the formula $T_{coating} = \frac{\pi}{4}(R^2 - R_0^2)/L - T_{strip}$. (The so-called theoretical value is a set of known quantities to verify the measurement deviation of the coating thickness in this case.)

Table 2-1 lists the measurement deviations of the outer diameter R of the coated steel coils in Examples 6-14 and the measurement deviation of the coating thickness at this deviation. Table 2-2 lists the measurement deviation of the inner diameter $R_0$ of the coated steel coil in Examples 15-23 and the measurement deviation of the coating thickness under this deviation. Table 2-3 lists the measurement deviation of the strip length L of steel strip that forms coil in Example 24-32 and measurement deviation of the coating thickness at this deviation. Table 2-4 lists the measurement deviation of uncoated steel strip thickness $T_{strip}$ in Examples 33-41 and the measurement deviation of the coating thickness at this deviation.

Wherein, the measurement deviation of the coating thickness is calculated by using the $T_{coating}$ obtained by the measurement in the present invention and the theoretical value of the coating thickness of the steel plate, that is, the example 6-41 is intended to verify: whether the calculated coating thickness measurement is accurate and the difference between the calculated coating thickness and its theoretical value when the selected measuring instrument has a measurement deviation.

Table 2-1

|  | The measured outer diameter R(mm) | Measurement deviations of the outer diameter(mm) | Measurement deviations of the outer diameter | Measurement deviation of coating thickness |
|---|---|---|---|---|
| Example 6 | 1831 | -4 | -2.2‰ | -6.67% |
| Example 7 | 1832 | -3 | -1.6‰ | -5.00% |
| Example 8 | 1833 | -2 | -1.1‰ | -3.33% |
| Example 9 | 1834 | -1 | -0.5‰ | -1.66% |
| Example 10 | 1835 | 0 | 0.0‰ | 0.00% |
| Example 11 | 1836 | 1 | 0.5‰ | 1.66% |
| Example 12 | 1837 | 2 | 1.1‰ | 3.32% |
| Example 13 | 1838 | 3 | 1.6‰ | 4.97% |
| Example 14 | 1839 | 4 | 2.2‰ | 6.62% |

Table 2-2

|  | The measured inner diameter $R_0$(mm) | Measurement deviation of the inner diameter(mm) | Measurement deviation of the inner diameter | Measurement deviation of coating thickness |
|---|---|---|---|---|
| Example 15 | 504 | -4 | -7.9‰ | 1.83% |
| Example 16 | 505 | -3 | -5.9‰ | 1.37% |
| Example 17 | 506 | -2 | -3.9‰ | 0.92% |

(continued)

|  | The measured inner diameter $R_0$(mm) | Measurement deviation of the inner diameter(mm) | Measurement deviation of the inner diameter | Measurement deviation of coating thickness |
|---|---|---|---|---|
| Example 18 | 507 | -1 | -2.0‰ | 0.46% |
| Example 19 | 508 | 0 | 0.0‰ | 0.00% |
| Example 20 | 509 | 1 | 2.0‰ | -0.46% |
| Example 21 | 510 | 2 | 3.9‰ | -0.92% |
| Example 22 | 511 | 3 | 5.9‰ | -1.39% |
| Example 23 | 512 | 4 | 7.9‰ | -1.85% |

Table 2-3

|  | The measured length L(m) | Measurement deviation of the strip length(m) | Measurement deviation of the strip length | Measurement deviation of coating thickness |
|---|---|---|---|---|
| Example 24 | 7992 | -8 | -1.00‰ | 1.41% |
| Example 25 | 7994 | -6 | -0.75‰ | 1.06% |
| Example 26 | 7996 | -4 | -0.50‰ | 0.70% |
| Example 27 | 7998 | -2 | -0.25‰ | 0.35% |
| Example 28 | 8000 | 0 | 0.00‰ | 0.00% |
| Example 29 | 8002 | 2 | 0.25‰ | -0.35% |
| Example 30 | 8004 | 4 | 0.50‰ | -0.70% |
| Example 31 | 8006 | 6 | 0.75‰ | -1.06% |
| Example 32 | 8008 | 8 | 1.00‰ | -1.41% |

Table 2-4

|  | The measured strip thickness $T_{strip}$(μm) | Measurement deviation of strip thickness(μm) | Measurement deviation of strip thickness | Measurement deviation of coating thickness |
|---|---|---|---|---|
| Example 33 | 284.2 | -0.8 | -2.81‰ | 3.95% |

(continued)

| | The measured strip thickness $T_{strip}(\mu m)$ | Measurement deviation of strip thickness($\mu m$) | Measurement deviation of strip thickness | Measurementdeviation of coating thickness |
|---|---|---|---|---|
| Example 34 | 284.4 | -0.6 | -2.11‰ | 2.96% |
| Example 35 | 284.6 | -0.4 | -1.41‰ | 1.98% |
| Example 36 | 284.8 | -0.2 | -0.70‰ | 0.99% |
| Example 37 | 285.0 | 0 | 0.00‰ | 0.00% |
| Example 38 | 285.2 | 0.2 | 0.70‰ | -0.99% |
| Example 39 | 285.4 | 0.4 | 1.41‰ | -1.98% |
| Example 40 | 285.6 | 0.6 | 2.11‰ | -2.96% |
| Example 41 | 285.8 | 0.8 | 2.81‰ | -3.95% |

Among them, the coating thickness measurement deviation of Example 6 was the largest (-6.67%), and the coating thickness measurement deviation of Examples 10, 19, 28, and 37 were the smallest (0.00%). According to known in the art, the measurement deviation of the coating thickness of the steel plate below 10% is high accuracy, and therefore the measurement method of the present invention is with high measurement accuracy.

It can be seen from Table 2-1, Table 2-2, Table 2-3 and Table 2-4 that even if a small amount of deviation occurs in the measuring devices, the measurement deviation of coating thickness in Examples 6-41 can satisfy the normal production requirements.

**Examples 42**

After quenching, the steel strip of Example 42 was applied coating of MgO by a two-roll coater, and was coiled after MgO was dried. The running speed of the steel strip is 85m/min. The strip thickness $T_{strip}$ before applying the coating was measured with an X-ray thickness gauge, the length L of the steel strip that forms coil was measured with a laser speedometer, and the outer diameter R and inner diameter $R_0$ of the coil with coating was measured by a laser range finder, wherein the measurement accuracy of the X-ray thickness gauge is $\pm 0.14\mu m$, the measurement accuracy of the laser speedometer is $\pm 0.5$ ‰$\times L$, and the measurement accuracy of the laser range finder is $\pm 1mm$. The coating thickness $T_{coating}$ coating is then calculated based on the formula $T_{coating} = \frac{\pi}{4}(R^2 - R_0^2)/L - T_{strip}$, wherein the outer diameter R of the coil with coating, the inner diameter $R_0$ of the coil with coating, the length L of the steel strip that forms coil, the uncoated strip thickness $T_{strip}$ and the coating thickness $T_{coating}$ are in same units.

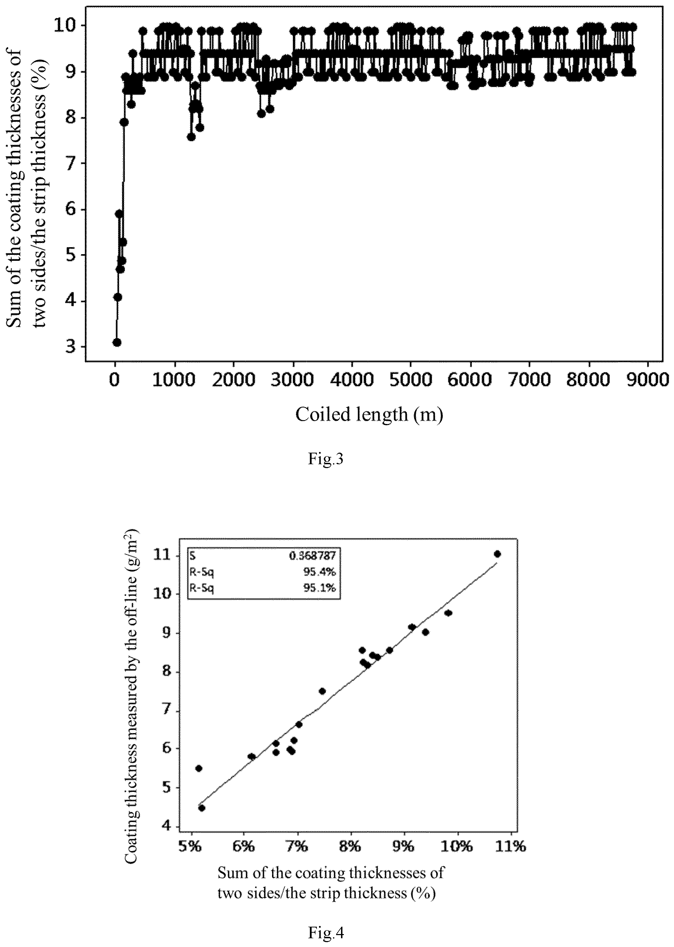

Fig.3 is a graph showing the relationship between the measured coating thickness value of the steel trip as a function of the length of the coil of Example 42. It can be seen that when the coiling length is less than 500m, the measured coating thickness $T_{coating}$ value has some degree of distortion due to the small coiling amount of strip. When the coiling length exceeds about 500 meters, the ratio of the sum of coating thickness of two sides to the strip thickness is between 8.5% to 10.0%, and the measured coating thickness $T_{coating}$ tends to be stable.

Fig.4 is a graph showing the relationship between the coating thickness measured by the measuring method according to the present invention and the thickness measured by the off-line measuring method of the prior art. It should be noted that the data of each point of the sum of the coating thicknesses of two sides/the strip thickness in the figure are excluding the data within 500-meter of coiling, and are average values of multiple measurements. The coating thickness of off-line measurement refers to the coating weight per unit area of the isolating agent by scraping certain area of the release agent powder off-line and weighing the isolating agent powder. It can be seen that the value of the correlation coefficient R_sq is 95.1% (R_sq is between 0 and 1. Generally speaking, when the value exceeds 0.7, it is considered to be correlation between the two parameters, and the closer the value is to 1, the better the correlation is). The correlation between the sum of the coating thicknesses of two sides/the strip thickness and the offline measured film thickness is good, indicating that the measurement accuracy of the coating thickness measured by the method of the present invention can satisfy the production requirements.

The scope of protection of the present invention is defined in the appended claims.

**Claims**

1. A method for measuring coating thickness of steel plate, comprising the following steps:

   prior to applying the coating, measuring the strip thickness $T_{strip}$ using a steel strip thickness measuring device (3), and strip length L of steel strip (1) that forms coil using a strip length measuring device (4), and after applying the coating, coiling the steel strip to form a coil and measuring outer diameter R and inner diameter $R_0$ of the coil with coating using a coil size measuring device (5),
   obtaining the coating thickness $T_{coating}$ using a controlling device according to the following formula

   $$T_{coating} = \frac{\pi}{4}(R^2 - R_0^2)/L - T_{strip,}$$

   wherein R, $R_0$, L, $T_{strip}$ and $T_{coating}$ are in the same unit.

2. The method for measuring coating thickness of steel plate according to claim 1, wherein strip length L≥500 meters, the ratio of the sum of coating thickness of two sides to the strip thickness is 8.5 to 10.0%.

3. The method for measuring coating thickness of steel plate according to claim 1, further comprising the following step:

   obtaining measurement accuracy of coating thickness $\Delta T_{coating}$ based on the following formula

   $$\Delta T_{coating} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{strip,}^2}$$

   wherein $\Delta T_{coating}$ is the measurement accuracy of $T_{coating}$, $\Delta R$ is the measurement accuracy of R, $\Delta R_0$ is the measurement accuracy of $R_0$, $\Delta T_{strip}$ is the measurement accuracy of $T_{strip}$, $\Delta L$ is the measurement accuracy of L, and $\Delta R$, $\Delta R_0$, $\Delta T_{strip}$ and $\Delta L$ refer to the measurement accuracy of the measuring device.

4. The method for measuring coating thickness of steel plate according to claim 3, wherein $\Delta L$ is selected as ≤3‰×L.

5. The method for measuring coating thickness of steel plate according to claim 3, wherein $\Delta R$ is selected as ≤±3‰×R, and $\Delta R_0$ is selected as ≤±3‰×$R_0$.

6. The method for measuring coating thickness of steel plate according to claim 3, wherein $\Delta T_{strip}$ is selected as ≤±3‰×$T_{strip}$.
   HLZ:KR

7. A measuring system for coating thickness of steel plate, comprising:

   a steel strip thickness measuring device (3) configured to measure the thickness $T_{strip}$ of a strip (1) prior to coating application, which, in use, is disposed upstream of a coating device (2) along the running direction of the strip (1);
   a strip length measuring device (4) configured to measure the length L of the strip (1) that forms coil, which, in use, is disposed upstream of a coiler (6) along the running direction of the strip (1);
   a coil size measuring device (5) configured to measure the outer diameter R and the inner diameter $R_0$ of a coil with coating, which, in use, is disposed downstream of the coiler (6) along the running direction of the strip, and at the periphery of the area where the coil with coating passes;
   a controlling device, which is respectively connected to the strip thickness measuring device, the strip length measuring device and the coil size measuring device, which is configured to receive the data of the $T_{strip}$ L, R, $R_0$ transmitted by the above measuring devices, and which is configured to calculate and output the coating thickness $T_{coating}$ based on said data.

**8.** The measuring system according to claim 7, wherein said control device is configured to calculate and to output coating thickness measurement accuracy $\mathit{\Delta T_{coating}}$ based on the following formula:

$$\Delta T_{coating} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{strip}^2}$$

wherein $\mathit{\Delta T_{coating}}$ is the measurement accuracy of $T_{coating}$, $\Delta R$ is the measurement accuracy of R, $\Delta R_0$ is the measurement accuracy of $R_0$, $\mathit{\Delta T_{strip}}$ is the measurement accuracy of $T_{strip}$, $\Delta L$ is the measurement accuracy of L, and $\Delta R$, $\Delta R_0$, $\mathit{\Delta T_{strip}}$ and $\Delta L$ refer to the measurement accuracy of the measuring device.

**9.** The measuring system according to claim 7 or 8, wherein the strip thickness measuring device (3) is an X-ray thickness gauge, and/or the strip length measuring device (4) is a laser speedometer based on *Doppler effect*, and/or the coil size measuring device (5) is a laser rangefinder.

**Patentansprüche**

**1.** Verfahren zur Messung der Beschichtungsdicke eines Stahlblechs, das die folgenden Schritte umfasst:

vor dem Auftragen der Beschichtung, Messen der Banddicke $T_{Band}$ unter Verwendung einer Stahlbanddickenmessvorrichtung (3), und der Bandlänge L des Stahlbandes (1), das ein Coil bildet, unter Verwendung einer Bandlängenmessvorrichtung (4), und nach dem Auftragen der Beschichtung, Aufwickeln des Stahlbandes zu einem Coil und Messen des Außendurchmessers R und des Innendurchmessers $R_0$ des Coils mit Beschichtung unter Verwendung einer Coil-Größenmessvorrichtung (5),
Ermitteln der Schichtdicke $T_{Beschichtung}$ unter Verwendung einer Steuervorrichtung, nach der folgenden Formel

$$T_{Beschichtung} = \frac{\pi}{4}(R^2 - R_0^2)/L - T_{Band},$$

wobei R, $R_0$, L, $T_{Band}$ und $T_{Beschichtung}$ in der gleichen Einheit sind.

**2.** Verfahren zur Messung der Beschichtungsdicke eines Stahlblechs gemäß Anspruch 1, wobei die Bandlänge L≥500 Meter ist und das Verhältnis der Summe der Beschichtungsdicken von zwei Seiten zu der Banddicke 8,5 bis 10,0% beträgt.

**3.** Verfahren zur Messung der Beschichtungsdicke eines Stahlblechs gemäß Anspruch 1, das außerdem den folgenden Schritt umfasst:

Erhalten der Messgenauigkeit der Schichtdicke $\mathit{\Delta T_{Beschichtung}}$ auf Grundlage der folgenden Formel

$$\Delta T_{Beschichtung} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{Band}^2},$$

wobei $\mathit{\Delta T_{Beschichtung}}$ die Messgenauigkeit von $T_{Beschichtung}$ ist, $\Delta R$ die Messgenauigkeit von R ist, $\Delta R_0$ die Messgenauigkeit von $R_0$ ist, $\mathit{\Delta T_{Band}}$ die Messgenauigkeit von $T_{Band}$ ist, $\Delta L$ die Messgenauigkeit von L ist, und $\Delta R$, $\Delta R_0$, $\mathit{\Delta T_{Band}}$ und $\Delta L$ sich auf die Messgenauigkeit des Messgeräts beziehen.

**4.** Verfahren zur Messung der Beschichtungsdicke eines Stahlblechs gemäß Anspruch 3, wobei $\Delta L$ als $\leq\pm 3‰ \times L$ ausgewählt wird.

**5.** Verfahren zur Messung der Beschichtungsdicke eines Stahlblechs gemäß Anspruch 3, wobei $\Delta R$ als $\leq\pm 3‰ \times R$ ausgewählt wird, und $\Delta R_0$ als $\leq\pm 3‰ \times R_0$ ausgewählt wird.

**6.** Verfahren zur Messung der Beschichtungsdicke eines Stahlblechs gemäß Anspruch 3, wobei $\Delta T_{Band}$ als $\leq \pm 3‰ \times T_{Band}$ ausgewählt wird.

**7.** Messsystem für die Beschichtungsdicke von Stahlblech, umfassend:

eine Stahlbanddickenmessvorrichtung (3), die konfiguriert ist zum Messen der Dicke $T_{Band}$ eines Bandes (1) vor dem Auftragen einer Beschichtung, und die im Gebrauch stromaufwärts von einer Beschichtungsvorrichtung (2) entlang der Laufrichtung des Bandes (1) angeordnet ist;
eine Bandlängenmessvorrichtung (4), die konfiguriert ist zum Messen der Länge L des Bandes (1), das ein Coil bildet, und die im Gebrauch stromaufwärts von einer Haspel (6) entlang der Laufrichtung des Bandes (1) angeordnet ist;
eine Coil-Größenmessvorrichtung (5), die konfiguriert ist zum Messen des Außendurchmessers R und den Innendurchmessers $R_0$ eines Coils mit Beschichtung, und die im Gebrauch stromabwärts der Haspel (6) entlang der Laufrichtung des Bandes und am Umfang des Bereichs angeordnet ist, in dem das Coil mit Beschichtung passiert;
eine Steuervorrichtung, die jeweils mit der Banddickenmessvorrichtung, der Bandlängenmessvorrichtung und der Coil-Größenmessvorrichtung verbunden ist, die konfiguriert ist die Daten von $T_{Band}$ L, R, $R_0$, die von den oben genannten Messvorrichtungen übertragen werden, zu empfangen, und die so konfiguriert ist, dass sie die Beschichtungsdicke $T_{Beschichtung}$ auf der Grundlage dieser Daten berechnet und ausgibt.

**8.** Messsystem gemäß Anspruch 7, wobei die Steuervorrichtung so konfiguriert ist, dass sie die Genauigkeit der Schichtdickenmessung $\Delta L_{Beschichtung}$ berechnet und ausgibt, auf Grundlage der folgenden Formel:

$$\Delta T_{Beschichtung} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{Band}^2}$$

wobei $\Delta T_{Beschichtung}$ die Messgenauigkeit von $T_{Beschichtung}$ ist, $\Delta R$ die Messgenauigkeit von R ist, $\Delta R_0$ die Messgenauigkeit von $R_0$ ist, $\Delta T_{Band}$ die Messgenauigkeit von $T_{Band}$ ist, $\Delta L$ die Messgenauigkeit von L ist, und $\Delta R$, $\Delta R_0$, $\Delta T_{Band}$ und $\Delta L$ sich auf die Messgenauigkeit des Messgeräts beziehen.

**9.** Messsystem gemäß Anspruch 7 oder 8, wobei es sich bei der Banddickenmesseinrichtung (3) um ein Röntgen-Dickenmessgerät und/oder bei der Bandlängenmesseinrichtung (4) um einen auf dem *Dopplereffekt* basierenden Lasertachometer und/oder bei der Coil-Größenmesseinrichtung (5) um einen Laserentfernungsmesser handelt.

**Revendications**

**1.** Procédé de mesure d'une épaisseur de revêtement d'une tôle d'acier, comprenant les étapes suivantes :

avant d'appliquer le revêtement, mesurer l'épaisseur de bande $T_{strip}$ au moyen d'un dispositif de mesure d'épaisseur de bande d'acier (3) et la longueur de bande L de bande d'acier (1) qui forme une bobine au moyen d'un dispositif de mesure de longueur de bande (4), et après l'application du revêtement, enrouler la bande d'acier pour former une bobine et la mesure du diamètre externe R et du diamètre interne $R_0$ de la bobine avec le revêtement au moyen d'un dispositif de mesure de taille de bobine(5),
obtenir l'épaisseur de revêtement $T_{coating}$ au moyen d'un dispositif de contrôle selon la formule suivante

$$T_{coating} = \frac{\pi}{4}(R^2 - R_0^2)/L - T_{strip,}$$

dans lequel R, $R_0$, L, $T_{strip}$ et $T_{coating}$ sont dans la même unité.

**2.** Procédé de mesure d'une épaisseur de revêtement d'une tôle d'acier selon la revendication 1, dans lequel la longueur de bande L $\geq$ 500 mètres, le rapport somme de l'épaisseur de revêtement des deux côtés sur l'épaisseur de bande est de 8,5 à 10,0 %.

**3.** Procédé de mesure d'une épaisseur de revêtement d'une tôle d'acier selon la revendication 1, comprenant en outre l'étape suivante :

obtenir une précision de mesure d'épaisseur de revêtement $\Delta T_{coating}$ sur la base de la formule suivante

$$\Delta T_{coating} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{strip}^2},$$

dans lequel $\Delta T_{coating}$ est la précision de mesure de $T_{coating}$, $\Delta R$ est la précision de mesure de R, $\Delta R_0$ est la précision de mesure de $R_0$, $\Delta T_{strip}$ est la précision de mesure de $T_{strip}$, $\Delta L$ est la précision de mesure de L, et $\Delta R$, $\Delta R_0$, $\Delta T_{strip}$ et $\Delta L$ font référence à la précision de mesure du dispositif de mesure.

4. Procédé de mesure d'une épaisseur de revêtement d'une tôle d'acier selon la revendication 3, dans lequel $\Delta L$ est sélectionné comme $\leq \pm 3 \text{‰} \times L$.

5. Procédé de mesure d'une épaisseur de revêtement d'une tôle d'acier selon la revendication 3, dans lequel $\Delta R$ est sélectionné comme $\leq \pm 3 \text{‰} \times R$, et $\Delta R_0$ est sélectionné comme $\leq \pm 3\text{‰} \times R_0$.

6. Procédé de mesure d'une épaisseur de revêtement d'une tôle d'acier selon la revendication 3, dans lequel $\Delta T_{strip}$ est sélectionné comme $\leq \pm 3 \text{‰} \times T_{strip}$.

7. Système de mesure d'une épaisseur de revêtement d'une tôle d'acier, comprenant :

un dispositif de mesure d'épaisseur de bande d'acier (3) configuré pour mesurer l'épaisseur $T_{strip}$ d'une bande (1) avant l'application d'un revêtement, qui, en utilisation, est disposé en amont du dispositif de revêtement (2) le long de la direction de circulation de la bande (1) ;
un dispositif de mesure de longueur de bande (4) configuré pour mesurer la longueur L de la bande (1) qui forme une bobine, qui, en utilisation, est disposé en amont d'une bobineuse (6) le long de la direction de circulation de la bande (1) ;
un dispositif de mesure de taille de bobine (5) configuré pour mesurer le diamètre externe R et le diamètre interne $R_0$ d'une bobine avec le revêtement, qui, en utilisation, est disposé en aval de la bobineuse (6) le long de la direction de circulation de la bande, et à la périphérie de la zone où passe la bobine avec le revêtement ;
un dispositif de contrôle, qui est respectivement connecté au dispositif de mesure d'épaisseur de bande, au dispositif de mesure de longueur de bande et au dispositif de mesure de taille de bobine, qui est configuré pour recevoir les données des $T_{strip}$, L, R, $R_0$ transmises par les dispositifs de mesure ci-dessus, et qui est configuré pour calculer et délivrer l'épaisseur de revêtement $T_{coating}$ sur la base desdites données.

8. Système de mesure selon la revendication 7, dans lequel ledit dispositif de contrôle est configuré pour calculer et pour délivrer une précision de mesure d'épaisseur de revêtement $\Delta T_{coating}$ sur la base de la formule suivante :

$$\Delta T_{coating} = \sqrt{(\pi^2 R^2)/(4L^2) \cdot \Delta R^2 + (\pi^2 R_0^2)/(4L^2) \cdot \Delta R_0^2 + [\pi^2(R^4 + R_0^4 - 2R^2 R_0^2)]/16L^4 \cdot \Delta L^2 + \Delta T_{strip}^2}$$

dans lequel $\Delta T_{coating}$ est la précision de mesure de $T_{coating}$, $\Delta R$ est la précision de mesure de R, $\Delta R_0$ est la précision de mesure de $R_0$, $\Delta T_{strip}$ est la précision de mesure de $T_{strip}$, $\Delta L$ est la précision de mesure de L, et $\Delta R$, $\Delta R_0$, $\Delta T_{strip}$ et $\Delta L$ font référence à la précision de mesure du dispositif de mesure.

9. Système de mesure selon la revendication 7 ou 8, dans lequel le dispositif de mesure d'épaisseur de bande(3) est une jauge d'épaisseur à rayons X, et/ou le dispositif de mesure de longueur de bande (4) est un tachymètre laser basé sur l'effet Doppler, et/ou le dispositif de mesure de taille de bobine (5) est un télémètre laser.

Fig.1

Fig.2

Fig.3

Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03200004 B
- JP 2009186333 A
- JP S6235210 A
- US 8982337 B